Europäisches Patentamt

European Patent Office

Office européen des brevets

(19)

(11) Numéro de publication : **0 474 574 A1**

# (12) DEMANDE DE BREVET EUROPEEN

(21) Numéro de dépôt : **91440067.6**

(22) Date de dépôt : **21.08.91**

(51) Int. Cl.⁵ : **A01B 49/06**

(30) Priorité : **22.08.90 FR 9010662**

(43) Date de publication de la demande :
**11.03.92 Bulletin 92/11**

(84) Etats contractants désignés :
**DE GB NL**

(71) Demandeur : **Plaisance, Jean-Marie**
**3, Grande-Rue Montigny**
**F-54540 Badonviller (FR)**

(72) Inventeur : **Plaisance, Jean-Marie**
**3, Grande-Rue Montigny**
**F-54540 Badonviller (FR)**

(74) Mandataire : **Aubertin, François**
**Cabinet Lepage & Aubertin Innovations et**
**Prestations 4, rue de Haguenau**
**F-67000 Strasbourg (FR)**

(54) **Machine combinée agricole.**

(57)   Une machine combinée agricole comporte une machine pour travailler le sol (2) munie de socs (3) et d'une herse rotative (5) ou d'un rotor à dents et associée à un semoir mécanique (9) suivi d'un rouleau de sol (13).
   En vue de permettre un réglage individuel notamment de l'inclinaison et donc de la pénétration des socs (3) dans le sol, ceci par rapport à la herse rotative (5) ou le rotor à dents et le semoir mécanique (9), ces socs (3) et ladite herse rotative (5) ou ledit rotor à dents sont montés sur des bâtis (17, 18) distincts reliés par l'intermédiaire de moyens de liaison articulés (19) autorisant leur pivotement, l'un par rapport à l'autre, selon un axe de rotation horizontal, perpendiculaire à l'avance (4) de ladite machine combinée (1).

FIG. 1

L'invention concerne une machine combinée agricole comprenant une machine pour travailler le sol munie de socs et d'une herse rotative ou d'un rotor à dents et associée à un semoir mécanique suivi d'un rouleau de sol.

La présente invention trouvera son application dans le domaine des machines agricoles.

On connaît déjà, notamment par le document DE-U-8.803.705, des machines combinées correspondant à la description ci-dessus ayant pour objectif de permettre, lors d'un seul et même passage sur un champ, de procéder à un sous-solage suivi d'un grumelage puis de la semis, ceci étant effectué, un rouleau de sol venant aussitôt parfaire le travail.

L'inconvénient lié à ce type de machine combinée connue réside dans le fait que les différents outils sont associés de telle sorte que leur réglage individuel est parfaitement impossible, dans tous les cas limité, ce qui conduit à ne permettre l'utilisation de ce type de machine que dans des conditions bien précises.

Notamment, lorsque le sol est particulièrement dur et sec, il est souvent préconisé d'accentuer l'inclinaison des socs par rapport au terrain de manière à faciliter leur pénétration et garantir par là même, l'obtention de la profondeur souhaitée du sous-solage. Toutefois, les différents outils étant parfaitement liés les uns aux autres, cette modification d'inclinaison des socs ne peut être obtenue qu'en modifiant l'inclinaison de l'ensemble de la machine combinée au travers de l'attelage à trois poins la reliant au véhicule tracteur.

Or, dans ces conditions le travail des outils situés les plus en arrière de la machine a tendance à diminuer en efficacité, voire même à devenir totalement inutile.

Ainsi, par exemple, la modification de la position des semoirs conduit à une profondeur de semis différente. Or, cette profondeur est, précisément, déterminante pour une bonne pousse des végétaux ultérieurement.

Quant au rouleau de sol, son appui sur le terrain venant à diminuer suite à cette inclinaison de la machine il est clair que son rôle, dans de telles conditions, est totalement inefficace.

Des solutions ont été recherchées de manière à remédier au problème précité. Toutefois, ces solutions n'ont su satisfaire, totalement, jusqu'à présent car correspondant à des possibilités de réglage individuel, notamment, du rouleau de sol et des embouts de semoir. Ainsi, l'on comprend qu'en modifiant l'inclinaison des socs en procédant à la rotation de la machine autour d'un axe horizontal à hauteur de l'attelage, il est nécessaire de modifier, à la fois, la disposition de ces embouts de semoir et de régler le rouleau de sol. Or, ces opérations sont longues et ne peuvent être réalisées par l'usager rapidement, notamment lorsque, en cours de travail, cet usager constate un fonctionnement non convenable de sa machine combinée.

Par ailleurs, on connaît, également, par le document WO-A-8.806.399 une machine combinée agricole comportant, selon un premier mode de réalisation, d'une part, une machine pour travailler le sol pourvue, soit de socs, soit d'un rotor à dent et, d'autre part, un semoir mécanique auquel peut être associé un rouleau de sol. Il convient, en effet, d'observer qu'il n'est pas prévu, dans le cadre de ce mode de réalisation, la combinaison de socs et d'une herse rotative ou d'un rotor à dent en tant que machine pour travailler le sol. Plus particulièrement, en raison de leur structure, ces outils, tels que définis dans le document antérieur, ne peuvent en aucun cas, être associés. Ainsi, qu'il s'agisse de la machine munie de socs ou de la machine comprenant le rotor à dents, chacune d'entre elles comporte, dans sa partie avant, des éléments d'attache susceptibles de recevoir un attelage trois points autorisant leur liaison à un véhicule tracteur. Tandis qu'au niveau de leur partie arrière, cette machine munie de socs et la machine pourvue d'un rotor à dents comportent un chevalet sur lequel peuvent être engagés les profilés de section en "U" formant les moyens d'attache associés au semoir mécanique.

Il convient de noter à ce propos, que cette liaison entre ce semoir mécanique et le rotor à dent ou la machine à socs, est rigide.

Dans le cadre de ce document WO-A-8.806.399, il est par ailleurs, décrit un autre mode de réalisation de la machine agricole combinée, mode de réalisation dans lequel il est prévu d'associer, au bâti du rotor à dent des socs. Toutefois, ce type de construction s'apparente très exactement à la machine combinée agricole telle que décrite dans le document cité plus haut à savoir DE-U-8.803.705.

Aussi, la présente invention a pour but de remédier aux inconvénients précités en proposant une machine combinée agricole dont l'inclinaison des outils destinés au sous -solage, est aisément réglable sans que cela ne modifie en rien, la position des autres outils et, plus particulièrement, de la herse rotative ou du rotor à dents, du semoir ou encore du rouleau de sol.

L'invention, telle qu'elle est caractérisée dans la revendication 1, permet d'atteindre cet objectif en prévoyant une machine combinée agricole comprenant une machine pour travailler le sol munie de socs et d'une herse rotative ou d'un rotor à dents et associée à un semoir mécanique suivi d'un rouleau de sol, les socs et la herse rotative ou le rotor à dents étant montés sur des bâtis distincts reliés par l'intermédiaire de moyens de liaison articulés autorisant leur pivotement l'un par rapport à l'autre selon un axe de rotation horizontal perpendiculaire à l'avance de ladite machine combinée.

Les avantages obtenus grâce à cette invention consistent, également, en ce qu'au travers de l'articulation reliant le bâti muni des socs à celui correspondant à la herse rotative ou au rotor à dents, il est particulièrement aisé de modifier l'inclinaison et donc la pénétration des socs dans le sol. Cette opération peut donc être entreprise en cours de travail dès l'instant où l'on constate que le sous-solage est anormal.

L'invention est exposée ci-après, plus en détail à l'aide de dessins représentant seulement un mode d'exécution :

     – la figure 1 est une représentation schématisée, en perspective et en élévation d'une machine combinée conforme à l'invention ;

     – la figure 2 est une représentation de détail de la figure 1 et illustrant, en partie, les moyens de liaison articulés reliant le bâti supportant les socs au bâti correspondant à la herse rotative ou au rotor à dents ;

     – la figure 3 est une vue schématisée et de face du bâti recevant les socs.

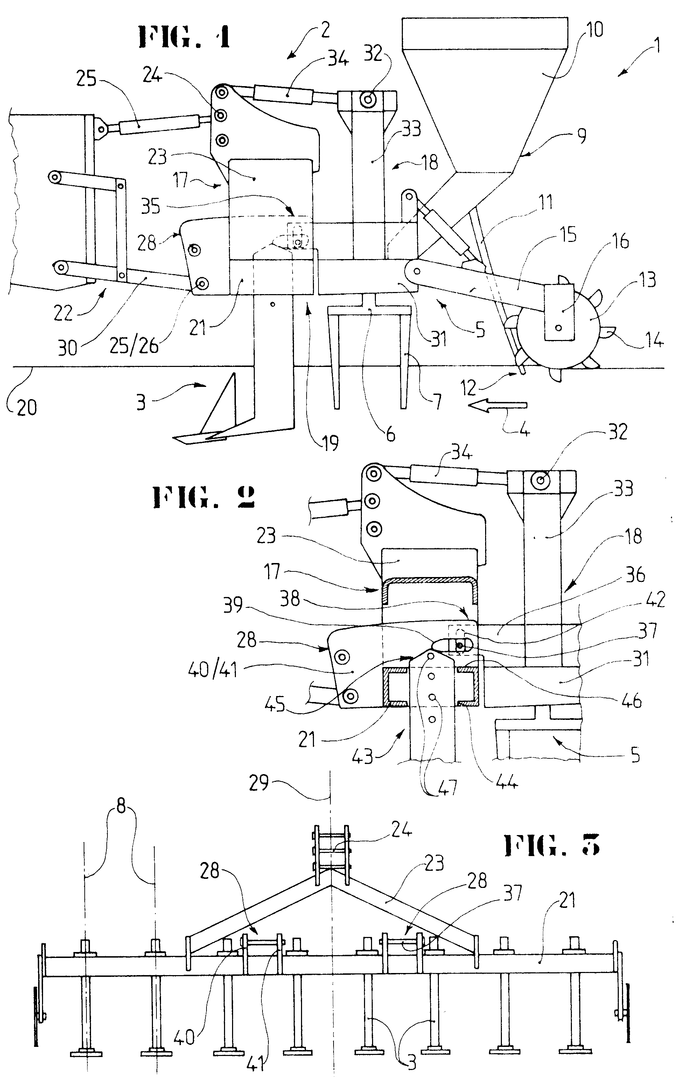

On se réfère plus particulièrement, à la figure 1.

La présente invention est relative à une machine combinée agricole 1 qui, attelée à un véhicule tracteur, se propose d'effectuer, simultanément, et lors d'un même passage, un sous-solage, puis un grumelage suivi d'un semis et, finalement, d'un roulage. En fait, le but recherché consiste à combiner ces différentes opérations de travail du sol et l'ensemencement de manière, d'une part, à éviter les passages successifs du véhicule tracteur sur le champ et réduire, ainsi, l'effet de compactage produit par les roues de ce véhicule tracteur et, d'autre part, permettre un gain de temps non négligeable.

Ainsi et tel que représenté dans les figures 1 et 3, cette machine combinée agricole 1 comporte, tout d'abord, une machine à travailler le sol 2, celle-ci étant munie d'une série de socs 3 équidistants les uns par rapport aux autres et disposés transversalement par rapport au sens d'avance 4. Cette machine à travailler le sol 2 comporte, en outre, soit une herse rotative 5, de la manière représentée dans la figure 1, soit un rotor à dents ayant une fonction sensiblement identique à cette herse rotative 5 et qui, de ce fait, n'a pas fait l'objet d'une représentation spécifique sur le dessin.

Plus précisément, la herse rotative 5 comporte une rangée de rotors 6 disposés parallèlement à la rangée des socs 3 et comprenant des outils 7 dirigés vers le bas ayant pour fonction le grumelage du sol. Préférentiellement, les rotors 6 sont entraînés en rotation de manière contra-rotative favorisant à la fois le grumelage mais aussi la répartition de la terre, préalablement amenée en sillons par l'intermédiaire des socs. A ce propos, on notera que, avantageusement, à un couple de rotors 6 correspond un soc 3, celui-ci se situant, sensiblement dans le plan médian 8 de ce couple de rotors.

En cas d'un rotor à dents, celui-ci se présente sous forme d'un rouleau comprenant une enveloppe cylindrique sur la paroi externe de laquelle étant rapportées des dents analogues à des lames assurant, également, le grumelage du sol.

La présente machine combinée 1 est munie, en outre, d'un semoir mécanique 9 comportant au moins une trémie à semence 10 surmontant approximativement, la herse rotative 5 ou le rotor à dents. A cette trémie à semence 10 sont raccordés des tubes de semis 11 reliés à leurs extrémités inférieures 12 à une barre de semis disposée à l'avant d'un rouleau de sol 13.

Quant à ce dernier, il se présente également, sous forme d'une enveloppe cylindrique sur laquelle est rapportée une denture 14 de géométrie bien définie en vue d'assurer son entraînement et garantir un parfait compactage de la terre. Des tirants 15 reliés par l'intermédiaire de paliers 16 à chacune des extrémités de ce rouleau de sol 13, assurent la liaison de ce dernier à l'ensemble de la machine combinée 1.

Selon une caractéristique de la présente invention, les outils que compose la machine pour travailler le sol 2, à savoir les socs 3 d'une part, et la herse rotative 5 ou le rotor à dent, d'autre part, sont montés sur des bâtis 17 et 18 distincts reliés entre eux par l'intermédiaire de moyens de liaison articulés 19 autorisant leur pivotement l'un par rapport à l'autre selon un axe horizontal perpendiculaire à l'avance 4 de la machine combinée 1.

En fait, il est pour objectif de la présente invention, au travers de la caractéristique précitée, d'autoriser un réglage de l'angle d'attaque et donc de l'inclinaison des socs 3 par rapport au sol 20 sans que ce réglage ne vienne à modifier la position des autres outils de cette machine combinée 1.

Selon un mode de réalisation préférentiel de l'invention représenté dans les différentes figures du dessin joint en annexe, le bâti 17, auquel sont raccordés les socs 3, se présente sous forme d'une poutre horizontale 21 disposée perpendiculairement à l'avance 4, cette poutre 21 venant à être reliée, au travers d'un attelage à trois points 22 à un véhicule tracteur non représenté.

Ainsi et tel qu'illustré dans la figure 3, ladite poutre 21 est surmontée d'un chevalet 23 dont le sommet constitue le point supérieur 24 qui vient à coopérer avec ledit véhicule tracteur par l'intermédiaire d'une bielle supérieure25. Quant aux points inférieurs 26, 27, ceux-ci sont constitués par deux chapes 28 disposées sur la poutre 21 à égale distance du plan médian vertical 29 de la machine combinée 1. A chacune de ces chapes 28 est reliée une bielle inférieure 30.

Le bâti 18 correspondant à la herse rotative 5 ou au rotor à dents adopte une configuration sensiblement similaire à celle du bâti 17 en ce sens qu'il se présente sous forme d'une poutre horizontale 31 disposée parallèlement à la poutre 21 munie des socs 3. Sous cette poutre 31, soit s'étendent, verticalement les rotors 6 munis de leurs outils 7 correspondant à la herse rotative 5, soit se situe le rotor à dents.

Quant aux moyens de liaison articulés 19, ceux-ci sont également de type à trois points et comportent un point supérieur 32 se situant à la partie supérieure d'un montant ou d'un chevalet 33 s'élevant au-dessus de la poutre 31, ce point supérieur 32 étant relié au travers d'une bielle 34 au point supérieur 24 que constitue le sommet du chevalet 23 correspondant au bâti 17.

Les moyens de liaison articulés 19 sont complétés, en outre, par deux points de liaison bas 35 constitués, substantiellement, par des pattes de fixation 36 solidaires de la poutre 31 et s'étendant sensiblement en avant de cette dernière de manière à coopérer, au travers d'axes d'articulation 37 avec des chapes 28 surmontant la poutre 21 correspondant au bâti 17. En fait, et tel que l'indique le repère, ces mêmes chapes 28 correspondent au point inférieur 26, 27 de l'attelage à trois points 22. Toutefois, on notera, que dans ces conditions, les pattes de fixation 36 viennent à coopérer avec ces chapes 28, de préférence dans leur partie arrière 38.

Il est bien évident que cette liaison des poutres 21 et 31 peut être obtenue au travers de points de liaison bas 35 se situant en des endroits différents des points inférieurs 26, 27, de l'attelage 22. Cependant, on tâchera, dans ces conditions, de conserver une disposition symétrique par rapport au plan médian vertical 29 de ces points de liaison bas 35.

En fait, pour qu'il soit possible de modifier l'inclinaison des socs 3 par rapport au sol 20 sans que ceci ne modifie la position, ni de la herse rotative 5 ou du rotor à dents, ni du rouleau de sol 13, les moyens de liaison articulés 19 permettant de relier le bâti 17 et le bâti 18 sont complétés par des moyens autorisant une mobilité au moins verticale des axes d'articulation 37, par rapport, soit aux chapes 28, soit aux pattes de fixation 36.

Plus précisément, ces axes d'articulation 37 traversent, simultanément, des ouvertures 39 aménagées dans les plaques verticales 40, 41 composant une chape 28 et une ouverture 42 pratiquée dans une patte de fixation 36 s'interposant entre lesdites plaques 40, 41. Aussi, il est préconisé, selon un mode de réalisation préférentiel de la présente invention, de concevoir soit les ouvertures 39, soit l'ouverture 42, de forme oblongue de manière à permettre un débattement vertical de ces axes d'articulation 37, soit par rapport aux chapes 28, soit par rapport aux pattes de fixation 36.

A noter qu'à ce débattement vertical de ces axes d'articulation 37 peut être ajouté un débattement horizontal, ceci en vue de garantir une plus grande mobilité du bâti 17, correspondant aux socs 3, par rapport au bâti 18 de la herse rotative 5 ou du rotor à dents. Ainsi, au cas où les pattes de fixation 36 sont munies d'ouvertures 42 de forme oblongue disposées verticalement, il est préconisé de conférer aux ouvertures 39, aménagées dans les plaques 40, 41 correspondant à une chape 28, une forme oblongue dans le sens horizontal. Bien entendu et tel que ceci fut déjà évoqué plus haut dans la description, une disposition contraire peut être adoptée. Par ailleurs, il peut être choisi de conférer uniquement, soit aux ouvertures 39, soit aux ouvertures 42, une dimension largement supérieure au diamètre de l'axe d'articulation 37 de manière à autoriser une mobilité bidirectionnelle de ce dernier par rapport à une chape 28, ou à une patte de fixation 36.

De plus, la bielle 34, associant le montant ou chevalet 33, correspondant à la poutre 31, au chevalet 23 du bâti 17 est, préférentiellement, réglable en longueur, ceci en vue d'affiner le réglage en inclinaison des outils que constituent les socs 3.

Par ailleurs, on notera qu'en ce qui concerne ces derniers, ils peuvent être positionnés en hauteur par rapport à la poutre 21 qui les supporte. Plus précisément, ces socs 3 sont insérés au niveau de leur partie supérieure 43, dans des ouvertures 44, aménagées, à cet effet, dans la poutre 21. Ainsi, leur extrémité supérieure 45 vient à émerger au niveau de la face supérieure 46 de cette poutre 21 et une goupille engagée dans un orifice 47 présent au niveau de cette extrémité supérieure saillante 45 vient les fixer sur ladite poutre 21. Plus exactement, la partie supérieure 43 du soc 3 est équipée de plusieurs orifices 45 alignés suivant une direction verticale autorisant finalement le réglage en hauteurs de ces socs 3.

Au vu de la description qui précède, on constate qu'en raison des liens particuliers reliant les outils composant la machine à travailler le sol 2, à savoir les socs 3 et la herse rotative 5 ou le rotor à dents, il est particulièrement aisé de procéder à un réglage desdits socs 3 en fonction des paramètres de la terre, sans que ce réglage n'intervienne sur l'efficacité des autres outils composant la machine combinée agricole, conforme à l'invention.

## Revendications

1. Machine combinée agricole comprenant une machine pour travailler le sol (2) munie de socs (3) et d'une herse rotative (5) ou d'un rotor à dents et associée à un semoir mécanique (9) suivi d'un rouleau de sol (13), caractérisée par le fait que les socs (3) et la herse rotative (5) ou le rotor à dents sont montés sur des bâtis (17, 18) distincts reliés par l'intermédiaire de moyens de liaison articulés (19) autorisant leur pivotement l'un par rapport à l'autre selon un axe de rotation horizontal, perpendiculaire à l'avance (4) de ladite machine combinée (1).

2. Machine combinée agricole selon la revendication 1, caractérisée en ce que :

– d'une part, le bâti (17) correspondant aux socs (3) se présente sous forme d'une poutre horizontale (21) disposée perpendiculairement à l'avance (4), cette poutre (21) étant surmontée d'un chevalet (23) dont le sommet constitue le point supérieur (24) d'un attelage à trois points (22) autorisant la liaison de ladite machine combinée agricole (1) à un véhicule tracteur ;

– et d'autre part, le bâti (18) correspondant à la herse rotative (5) ou au rotor à dents est constitué par une poutre horizontale (31) disposée, sensiblement, parallèlement à la poutre (21) et sous laquelle, soit s'étendent, verticalement, des rotors (6) munis de leurs outils (7) correspondant à la herse rotative (5), soit se situe le rotor à dents, à cette poutre (31) étant reliée, en outre, le semoir mécanique (9) et le rouleau de sol (13).

3. Machine combinée agricole selon les revendications 1 à 3, caractérisée par le fait que les moyens de liaison articulés (19) sont de type à trois points et comportent d'une part, un point supérieur (32) se situant à la partie supérieure d'un montant ou d'un chevalet (33) s'étendant au-dessus de la poutre (31), ce point supérieur (32) étant relié au travers d'une bielle (34) au point supérieur (24) que constitue le sommet du chevalet (23) correspondant au bâti (17) et, d'autre part, deux points de liaison bas (35) autorisant le pivotement du bâti (17), supportant les socs (3) par rapport au bâti (18), correspondant à la herse rotative (5) ou au rotor à dents, selon un axe de rotation horizontal et sensiblement perpendiculaire à l'avance (4) de ladite machine combinée agricole (1).

4. Machine combinée agricole selon la revendication 3, caractérisée par le fait que les points de liaison bas (35) sont constitués par des pattes de fixation (36) solidaires de la poutre (31) et s'étendant, sensiblement, en avant de cette dernière de manière à coopérer, au travers d'axes d'articulation (37), avec des chapes (28) surmontant la poutre (21) correspondant au bâti (17).

5. Machine combinée agricole selon les revendications 1 à 4, caractérisée par le fait que les moyens de liaison articulés (19) sont complétés par des moyens autorisant une mobilité au moins verticale des axes d'articulation (37) par rapport, soit aux chapes (28) correspondant à la poutre (21) soit aux pattes de fixation (36) liées à la poutre (31).

6. Machine combinée agricole selon la revendication 5, caractérisée par le fait que les chapes (28) sont constituées par des plaques verticales (40, 41) entre lesquelles s'interpose une patte de fixation (36), les axes d'articulation (37) traversant, simultanément, des ouvertures (39) aménagées dans lesdites plaques verticales (40, 41) et une ouverture (42) pratiquée dans une patte de fixation (36), soit les ouvertures (39), soit l'ouverture (42) empruntant une forme oblongue de manière à autoriser un débattement vertical de ces axes d'articulation (37), selon le cas par rapport aux chapes (28) ou, selon le cas par rapport aux pattes de fixation (36).

7. Machine combinée agricole selon la revendication 6, caractérisée par le fait que soit les ouvertures (39) aménagées dans les plaques (40, 41) correspondant aux chapes (28), soit les ouvertures (42) présentes dans les pattes de fixation (36) sont réalisées de forme oblongue dans le sens horizontal autorisant un débattement horizontal des axes d'articulation (37) par rapport auxdites chapes (28) ou par rapport aux pattes de fixation (36).

8. Machine combinée agricole selon les revendications 5 et 6, caractérisée par le fait que, soit les ouvertures (39) aménagées dans les plaques (40, 41) correspondant aux chapes (28), soit les ouvertures (42) correspondant aux pattes de fixation (36), comportent une dimension largement supérieure au diamètre des axes d'articulation (37) de manière à autoriser à ces dernières une mobilité bidirectionnelle par rapport auxdites chapes (28) ou par rapport aux pattes de fixation (36).

9. Machine combinée agricole selon la revendication 2, caractérisée par le fait que les socs (3) comportent leur partie supérieure (43) insérée dans la poutre (21) correspondant au bâti (17), ces socs (3) étant réglables en hauteur par rapport à ladite poutre (21).

FIG. 1

FIG. 2

FIG. 3

Office européen
des brevets

**RAPPORT DE RECHERCHE EUROPEENNE**

Numero de la demande

EP    91 44 0067

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | WO-A-8 806 399 (MASCHINENFABRIK RAU GMBH.)<br>* page 9 - page 12; figures 1-6 *<br>--- | 1-5,8 | A01B49/06 |
| X | EP-A-0 033 950 (MACHINENFABRIK RAU GMBH.)<br>* page 13 - page 17; figure 1 *<br>--- | 1,2,6,7 | |
| D,X | DE-U-8 803 705 (F. DUTZI)<br>* page 10 - page 12; figure 1 *<br>--- | 1,8 | |
| A | DE-A-3 609 968 (H. BüTTNER)<br>* page 7, ligne 15 - page 9, ligne 23; figures 1,2 *<br>--- | 1-5 | |
| A | FR-A-2 521 817 (AMAZONEN-WERKE H. DREYER GMBH & CO.)<br>* page 4 - page 7; figures 1,2 *<br>----- | 1 | |
| | | | **DOMAINES TECHNIQUES RECHERCHES (Int. Cl.5 )**<br><br>A01B |

Le présent rapport a été établi pour toutes les revendications

| Lieu de la recherche | Date d'achèvement de la recherche | Examinateur |
|---|---|---|
| LA HAYE | 14 NOVEMBRE 1991 | RAVEN P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)